# EUROPEAN PATENT SPECIFICATION

(11) **EP 4 579 207 B1**
(45) Date of publication and mention of the grant of the patent: **04.11.2026**
(21) Application number: 23383379.7
(22) Date of filing: 26.12.2023
(51) Int. Cl.: G02B 6/36, G01M 5/00, G01M 11/08, B23K 9/04

(54) **METHOD AND DEVICE FOR INTEGRATING AN OPTICAL FIBER INTO A METAL STRUCTURE**
VERFAHREN UND VORRICHTUNG ZUR INTEGRATION EINER OPTISCHEN FASER IN EINE METALLSTRUKTUR
PROCÉDÉ ET DISPOSITIF D'INTÉGRATION D'UNE FIBRE OPTIQUE DANS UNE STRUCTURE MÉTALLIQUE

(43) Date of publication of application: 02.07.2025
(73) Proprietor: LORTEK S. COOP., 20240 Ordizia (Gipuzkoa) (ES); BCMaterials, Centro Vasco de Materiales, Aplicaciones y Nanoestructuras, 48940 Leioa (ES)
(72) Inventor: ITURRIOZ ZABALA, Amaia, 20240 ORDIZIA (ES); RODRIGUEZ RUBIO, Iker, 20240 ORDIZIA (ES); ALVAREZ MORO, Pedro, 20240 ORDIZIA (ES); ROSERO ROMO, James Janderson, 48940 LEIOA (CO); SALAZAR JARAMILLO, Daniel, 48940 LEIOA (ES)
(74) Representative: Galbaian S.Coop.

(56) References cited:
- WO-A1-2013/186256
- GRANDAL TANIA ET AL: "Analysis of Fiber Optic Sensor Embedded in Metals by Automatic and Manual TIG Welding", IEEE SENSORS JOURNAL, IEEE, USA, vol. 19, no. 17, 1 September 2019 (2019-09-01), pages 7425 - 7433, XP011738968, ISSN: 1530-437X, [retrieved on 20190805], DOI: 10.1109/JSEN.2019.2916639

## Description

### TECHNICAL FIELD

The present invention relates to methods for integrating an optical fibre into a metallic structure of a given metal, to provide the metallic structure with structural health monitoring (SHM) functionality.

### PRIOR ART

The need to obtain real-time information on a structure is of paramount importance for many applications, which may require real-time information such as deformation values, vibrations and temperatures on the part for example.

This information is obtained by sensors, which are usually placed in the required positions on the surface of the structure, attached to the structure. Mounting a large number of sensors is cumbersome, time-consuming, weight-intensive and costly, and may be difficult when the structure is to operate in hostile environments.

There is therefore a growing trend towards the use of sensors that are integrated into the structure, have minimal effect on its structural integrity, are protected from damage and are isolated from the environmental effects surrounding the structure. Such sensors are widely used, for example, due to their small size and high sensitivity in measuring the required variables.

When the structure is metallic, a known technique for integrating fibre optic sensors is to deposit metal foils on the optical fibre by ultrasonic bonding. Ultrasonic bonding is solid-state and does not reach high temperatures, so the optical fibre is not damaged. This technique is very useful for both aluminium structures, which have a low melting temperature (660°), and metals with a higher melting point (stainless steels, for example).

However, the tougher and harder the material, the more difficult it is to consolidate by ultrasound. The thickness of the deposited sheets is also very small (around 150 microns), which requires a large number of layers to embed the fibres inside the part. Fusion welding, for example, is a technique with which the metal could be deposited on the optical fibre, but due to the high welding temperatures the optical fibre would be damaged if the molten metal is deposited directly on the fibre.

Therefore, there is a need for a method and a device for integrating an optical fibre into a metallic structure at the required depth, where the resulting integrated optical fibre is in intimate contact with the metal in which it is embedded to ensure monitoring of, for example, temperature, strain and vibration of the structure, and does not affect the structural integrity of said structure.

GRANDAL TANIA ET AL: "Analysis of Fiber Optic Sensor embedded in Metals by Automatic and Manual TIG Welding", IEEE SENSORS JOURNAL, IEEE, USA, vol. 19, no. 17, 1 September 2019 (2019-09-01), pages 7425-7433, XPOI1738968, ISSN: 1530-437X, DOI: 10.1109/JSEN.2019.2916639, discloses a method for embedding fiber optics sensors in metals, using an arc welding source and a filler metal wire. The filler metal comprises tin.

### DISCLOSURE OF THE INVENTION

The invention refers to a method and a device for integrating an optical fibre into a metallic structure, as defined in the claims.

The method is adapted for integrating an optical fibre into metallic structures, in which the optical fibre, covered with a metallic coating, is arranged in a channel of the metallic structure so that it is integrated to the required depth. In the method, a molten filler metal is deposited on the channel and on the optical fibre in such a way that the channel is filled and the optical fibre is covered and in direct contact with the metal all around its perimeter.

The filler metal contacts the metallic coating of the optic fibre when deposited, and the composition of said metallic coating is selected so that said metallic coating does not melt when said filler metal is deposited, and is selected such that it comprises a melting temperature higher than the temperature of the molten filler metal when deposited (at least the part that contacts the filler metal).

The deposition of the molten filler metal is carried out by a direct energy deposition process in which an arc welding source is used to continuously melt and deposit the metal in wire form, a technique known as DED-Arc or WAAM. This technique allows the process to be controlled very easily as it results in deposition of the molten metal in the form of a wire. The wire form also helps to arrange the metal more precisely where it is required, thus ensuring to a greater extent that the optical fibre to be integrated into the metal structure is completely surrounded by metal, guaranteeing its sensing function.

Moreover, as the metal that is deposited is the same in composition as the metal of which the metallic structure in which the optical fibre is integrated is composed, the state of the metallic structure that sensors the optical fibre is faithful to the properties of the corresponding metal. This fact, combined with the filling of the channel, allows the optical fibre to adhere strongly to the metallic structure through the deposited metal, increasing the reliability of the information obtained through the optical fibre, which is relevant for the correct monitoring of deformations and vibrations.

The new method also reduces the time and cost of manufacturing sensorised metallic structures, enables monitoring throughout the structure with a single interrogator, reducing inspection and maintenance costs, and facilitates the scalability of structural monitoring without significantly increasing the weight of the structure or the need for additional sensor mounting operations.

These and other advantages and features of the invention will become apparent in view of the figures and the detailed description of the invention.

### DESCRIPTION OF THE DRAWINGS

Figure 1 shows an optical fibre integrated in a metallic structure, according to an embodiment of the method of the invention.
Figure 2 shows an embodiment of a device for integrating an optical fibre into a metallic structure.
Figure 3 shows the interaction of a pressure element of the device of figure 2 with the coated optical fibre in a simplified manner, the optical fibre being clamped by a clamping element of the device of figure 2.

### DETAILED DISCLOSURE OF THE INVENTION

The invention relates to a method and a device 100 for integrating an optical fibre 1 into a metallic structure 2. The optical fibre 1 is preferably of the Rayleight, Brillouin or Raman Scattering type.

In the proposed method, an optical fibre 1 coated with a metallic coating 1.0 is used. Preferably the metallic coating 1.0 of the optical fibre 1 comprises two metals, a first metal directly coating the optical fibre 1 and a second metal coating the first metal and being exposed to the outside. Preferably the first metal is copper, and preferably the second metal is nickel which has a high melting temperature which is discussed below. In some embodiments the metallic coating 1.0 could comprise a single metal, and that metal would have a high melting temperature, so it could for example be nickel.

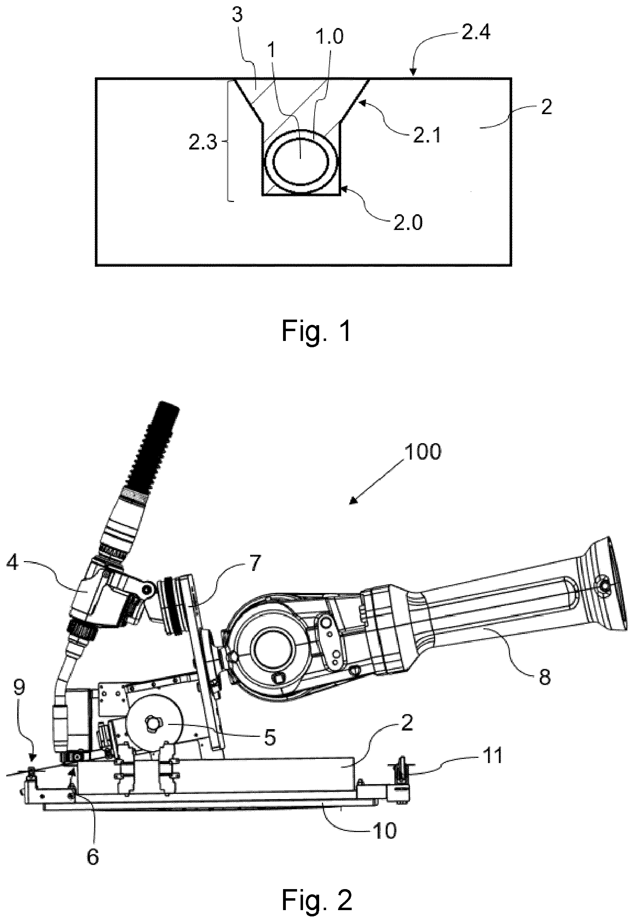

In the method, the optical fibre 1 coated with a metallic coating 1.0 is disposed in a channel 2.0 of a housing 2.3 of the metallic structure 2, as depicted in the embodiment of figure 1. Making the housing 2.3 may be part of the method, and in that case it could be done by machining, the machining being done just prior to the process of laying out the optical fibre 1 for example. Alternatively, the housing 2.3 could be generated during the fabrication of the metal structure 2. In the latter case such metal structure 2 (or at least the part comprising the housing 2.3) could be fabricated with an additive manufacturing technique such as the technique known as DED-Arc or WAAM, for example.

The method further comprises depositing a molten filler metal 3 on the channel 2.0 and on the optical fibre 1 arranged in the channel 2.0. Being initially molten, said filler metal 3 is properly adhered to the metal structure 2 after solidification. Despite being molten, said filler metal 3 does not damage the coated optical fibre 1 due to the metallic coating 1.0 of said optical fibre 1 and the arrangement of the optic fibre 1 within said channel 2.0. As said filler metal 3 contacts said metallic coating 1.0 which has a high melting temperature, at least on its outer part contacting said filler metal 3, said metallic coating 1.0 does not melt and the effect of the temperature of the melted filler metal 3 does not reach the optical fibre 1. The melting temperature of the metallic coating 1.0, or of the part contacting at least the filler metal 3, is selected to be higher than the temperature of the molten filler metal 3 when deposited.

The filler metal 3 is deposited by a direct energy deposition process in which an arc welding source 4 is used to continuously melt and deposit the filler metal 3, initially in the form of wire. Preferably the technique known as DED-Arc or WAAM is employed. The metallic coating 1.0 of the optical fibre 1 therefore comprises a metal which is the metal which contacts the molten filler metal 3, and said metal is selected such that it has a melting temperature above the temperature of the molten filler metal 3 when deposited. When the metal coating 1.0 has copper, such copper helps to distribute heat and further protects the optical fibre 1.

The composition of the filler metal 3 is the same as the composition of the metal forming the metallic structure 2, so that the optical fibre 1 reflects the structural behaviour of the metallic structure 2 faithfully.

The coated optical fibre 1 is arranged in a channel 2.0 with a depth such that the coated optical fibre 1 does not protrude from the channel 2.0 at the top. This makes it possible to cover the entire coated optical fibre 1 by filling the channel 2.0 with filler metal 3 (see figure 1) and to avoid direct contact with the heat source, electric arc in the case of DED-Arc or WAAM, which would damage the optical fibre 1.

If the optical fibre 1 is required to be integrated in the metallic structure 2 at a high depth with respect to an outer surface 2.4 of said metallic structure 2, the housing 2.3 further comprises a bevelling 2.1 between said outer surface 2.4 and the channel 2.0. In the described method the optical fibre 1 is preferably placed at the base or bottom of the channel 2.0. If the channel 2.0 is very deep, greater than 2 mm for example, it is possible that the filler metal 3 does not completely fill the channel 2.0 and does not completely cover the optical fibre 1. In that case, it has been found that the bevelling 2.1 facilitates the filler metal 3 to fill the channel 2.0 completely, reaching all the way to the bottom of the channel 2.0, and to cover the optical fibre 1.

In order to arrange the optical fibre 1 in the channel 2.0 of the metallic structure 2, preferably one end of the optical fibre 1 is clamped by means of a clamping element 9 and said arranging is carried out with said end clamped, thus facilitating said operation. When placing the optical fibre 1, it is preferable that the optical fibre 1 is tensioned and arranged at the bottom of the channel 2.0, preferably in the centre of said channel 2.0, in order to avoid movement of the optical fibre 1 during the deposition process.

Preferably the coated optical fibre 1 is wound on a reel 5 prior to its arrangement in the channel 2.0 of the metallic structure 2, said optical fibre 1 being unwound from said reel 5 as the optical fibre 1 is inserted into said channel 2.0. Preferably, the optical fibre 1 is unwound following the path of the channel 2.0 and ensuring its placement at the bottom of the channel 2.0, in such a way that, as the unwound end is also clamped, the operation of arranging the optical fibre 1 is very simple. Once the desired length of optical fibre 1 has been arranged, said optical fibre 1 is cut, the part of optical fibre 1 arranged in the channel 2.0 being physically separated from the part of optical fibre 1 that remains wound on the reel 5 after the operation of arranging the optical fibre 1 in said channel 2.0.

Alternatively, the entire operation of arranging and placing optical fibre 1 in channel 2.0 can be done manually, although preferably it is done automatically.

The filler metal 3 is deposited on the optical fibre 1 arranged in the channel 2.0, and such deposition is preferably carried out as the optical fibre 1 is arranged in the channel 2.0, and preferably continuously. Thus, if performed as the optical fibre 1 is arranged in the channel 2.0, the welding source 4 follows the movement of the reel 5. If the optical fibre 1 is arranged in the channel 2.0 manually, the deposition of the filler metal 3 is performed on the entire length of the optical fibre 1 previously inserted along the entire length of the channel 2.0.

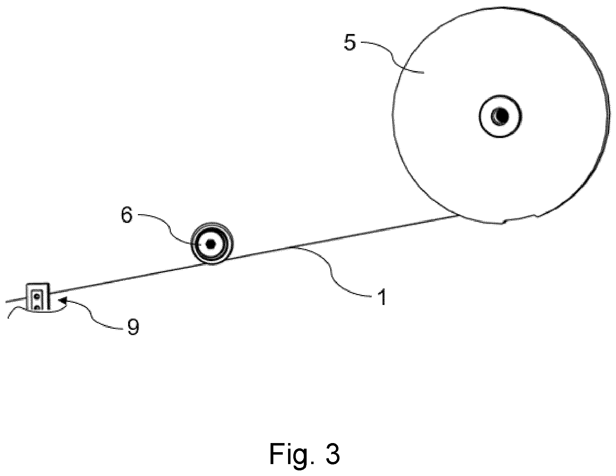

Preferably, the optical fibre 1 deposited in the channel 2.0 is pressed towards the bottom of the channel 2.0 as the optical fibre 1 is arranged in the channel 2.0, by means of a pressing element 6 (see figures 2 and 3), and the filler metal 3 is deposited on the optical fibre 1 which has already been pressed against the bottom of the channel 2.0. This ensures to a greater extent that the filler metal 3 fills the channel 2.0 and that the coated optical fibre 1 is surrounded by metal. Preferably such pressure is applied as the optical fibre 1 is deposited in the channel 2.0, and in an automatic manner, so that the pressure element 6 follows the reel 5 during its movement. Figure 3 shows a simplified representation of the interaction of the depression element 6 with the optical fibre 1 coated and held by the clamping element 9.

Preferably, the method is executed automatically, causing the simultaneous and joint displacement of the reel 5, the welding source 4 and the pressure element 6 during this execution (see figure 2). Such displacement can be controlled by a control unit not shown in the figures, which may comprise a microcontroller, a microprocessor, an FPGA or any other computationally capable device.

A second aspect of the invention relates to a device 100 for integrating an optical fibre 1 into a metallic structure 2, such as the one shown in figure 2 by way of example.

The device 100 comprises a clamping element 9 configured to clamp one end of an optical fibre 1 coated with a metallic coating 1.0, a reel 5 on which said coated optical fibre 1 is wound, an arc welding source 4 configured to continuously melt and deposit a molten filler metal 3 in the form of wire with its actuation, and a pressure element 6.

The device 100 is configured to implement the method described above, which is executed automatically.

The device 100 comprises a controllable movable device 8 (a robot arm for example), a control unit (not shown in the figures) communicating with the movable device 8 and configured to control a displacement of the movable device 8, and a support 7 attached to the movable device 8. The reel 5, the welding source 4 and the pressure element 6 are associated with said support 7, such that the welding source 4 is downstream of the pressure element 6 and said pressure element 6 is downstream of said reel 5. The reel 5 is freely rotatably attached to said support 7. The control unit is communicated with said welding source 4 and configured to control the actuation of said welding source 4.

The device 100 may further comprise a platform 10 configured on which the metal structure 2 is supported, and the clamping element 9 is attached to said platform 10. In some embodiments, the device 100 further comprises a cutting device 11 configured to cut the coated optical fibre 1, and the cutting device 11 is attached to the platform 10.

## Claims

1. Method for integrating an optical fibre into a metallic structure, wherein the optical fibre (1) is disposed in a channel (2.0) of a housing (2.3) of the metallic structure (2) being coated with a metallic coating (1.0), and a molten filler metal (3) is deposited on said channel (2.0) and on said coated optical fibre (1) disposed in said channel (2.0) by a direct energy deposition process wherein an arc welding source (4) is used to continuously melt and deposit the molten filler metal (3) in the form of wire, the metallic coating (1.0) of the optical fibre (1) comprising at least one metal with which the filler metal (3) contacts when it is deposited, said metal comprising a melting temperature above the temperature used in the deposition process, and the composition of the filler metal (3) being the same as the composition of the metal forming the metallic structure (2).

2. Method according to claim 1, wherein the coated optical fibre (1) is arranged in a channel (2.0) with a depth such that said coated optical fibre (1) does not protrude from said channel (2.0) at the top.

3. Method according to claim 2, wherein the housing (2.3) of the metal structure (2) comprises a bevelling (2.1) between an outer surface (2.4) of said metal structure (2) and the channel (2.0) of said housing (2.3).

4. Method according to any one of claims 1 to 3, comprising machining the housing (2.3) into the metal structure (2).

5. Method according to any one of claims 1 to 3, comprising generating the housing (2.3) during the manufacturing of the metal structure (2) by an additive manufacturing technique.

6. Method according to any one of claims 1 to 5, wherein, to arrange the coated optical fibre (1) in the channel (2.0) of the metallic structure (2), one end of said optical fibre (1) is clamped and said arrangement is made with said end clamped.

7. Method according to claim 6, wherein the coated optical fibre (1) is unwound from a reel (5) as it is arranged in the channel (2.0) and is cut off once all the required length of said optic fibre (1) has been arranged in the channel (2.0), so that the part of the optical fibre (1) arranged in the channel (2.0) is physically separated from the part of the optical fibre (1) which remains wound on the reel (5).

8. Method according to claim 7, wherein the filler metal (3) is deposited on the optical fibre (1) arranged in the channel (2.0) as the optical fibre (1) is arranged in the channel (2.0).

9. Method according to claim 8, wherein the optical fibre (1) deposited in the channel (2.0) is pressed towards the bottom of said channel (2.0) as said optical fibre (1) is arranged in said channel (2.0), by means of a pressure element (6), the filler metal (3) being deposited on the optical fibre (1) which has already been pressed against the bottom of said channel (2.0).

10. Method according to claim 9, which is executed automatically, causing simultaneous and joint displacement of the reel (5), the welding source (4) and the pressure element (6) during such execution.

11. Method according to any of claims 1 to 10, wherein the optical fibre (1) is of the Rayleight, Brillouin or Raman Scattering type.

12. Device for integrating an optical fibre into a metallic structure, the device (100) comprising a clamping element (9) configured to clamp one end of an optical fibre (1) coated with a metallic coating (1.0), a reel (5) on which said coated optical fibre (1) is wound, an arc welding source (4) configured to continuously melt and deposit a molten filler metal (3) in the form of wire with its actuation, and a pressure element (6), wherein the device (100) is configured to implement the method according to any one of claims 1 to 11, the device (100) comprising a controllable movable device (8), a control unit communicated with the movable device (8) and configured to control a displacement of the movable device (8), and a bracket (7) attached to the movable device (8), the reel (5), the welding source (4) and the pressure element (6) being attached to said bracket (7), the welding source (4) being downstream of the pressure element (6) and the pressure element (6) being downstream of the reel (5), the control unit being in communication with the welding source (4) and configured to control the actuation of the welding source (4).

13. Device according to claim 12, comprising a platform (10) configured to support the metal structure (2), the clamping element (9) being attached to said platform (10).

14. Device according to claim 13, comprising a cutting device (11) configured to cut the coated optical fibre (1) and which is attached to the platform (10).

## Patentansprüche

1. Verfahren zum Integrieren einer optischen Faser in eine Metallstruktur, wobei die optische Faser (1) in einem Kanal (2.0) eines Gehäuses (2.3) der Metallstruktur (2) angeordnet wird und mit einer Metallbeschichtung (1.0) beschichtet wird, und ein geschmolzenes Füllmetall (3) auf den Kanal (2.0) und auf die beschichtete optische Faser (1), die in dem Kanal (2.0) angeordnet ist, durch einen Direktenergieabscheidungsprozess abgeschieden wird, wobei eine Lichtbogenschweißquelle (4) verwendet wird, um kontinuierlich zu schmelzen und das geschmolzene Füllmetall (3) in Form eines Drahtes abzuscheiden, wobei die metallische Beschichtung (1.0) der optischen Faser (1) mindestens ein Metall umfasst, mit dem das Füllmetall (3) beim Abscheiden in Kontakt kommt, wobei das Metall eine Schmelztemperatur oberhalb der im Abscheidungsprozess verwendeten Temperatur umfasst und die Zusammensetzung des Füllmetalls (3) dieselbe ist wie die Zusammensetzung des die Metallstruktur (2) bildenden Metalls.

2. Verfahren nach Anspruch 1, wobei die beschichtete optische Faser (1) in einem Kanal (2.0) mit einer solchen Tiefe angeordnet ist, dass die beschichtete optische Faser (1) oben nicht aus dem Kanal (2.0) herausragt.

3. Verfahren nach Anspruch 2, wobei das Gehäuse (2.3) der Metallstruktur (2) eine Abschrägung (2.1) zwischen einer äußeren Oberfläche (2.4) der Metallstruktur (2) und dem Kanal (2.0) des Gehäuses (2.3) umfasst.

4. Verfahren nach einem der Ansprüche 1 bis 3, umfassend das Bearbeiten des Gehäuses (2.3) in die Metallstruktur (2).

5. Verfahren nach einem der Ansprüche 1 bis 3, umfassend das Erzeugen des Gehäuses (2.3) während der Herstellung der Metallstruktur (2) mittels einer additiven Fertigungstechnik.

6. Verfahren nach einem der Ansprüche 1 bis 5, wobei zur Anordnung der beschichteten optischen Faser (1) im Kanal (2.0) der Metallstruktur (2) ein Ende der optischen Faser (1) festgeklemmt wird und die Anordnung mit festgeklemmtem Ende erfolgt.

7. Verfahren nach Anspruch 6, wobei die beschichtete optische Faser (1) von einer Spule (5) abgewickelt wird, während sie in den Kanal (2.0) angeordnet wird, und abgeschnitten wird, sobald die gesamte erforderliche Länge der optischen Faser (1) im Kanal (2.0) angeordnet ist, sodass der im Kanal (2.0) angeordnete Teil der optischen Faser (1) physisch von dem Teil der optischen Faser (1) getrennt ist, der auf der Spule (5) aufgewickelt bleibt.

8. Verfahren nach Anspruch 7, wobei das Füllmetall (3) auf die im Kanal (2.0) angeordnete optische Faser (1) abgeschieden wird, während die optische Faser (1) im Kanal (2.0) angeordnet ist.

9. Verfahren nach Anspruch 8, wobei die im Kanal (2.0) abgeschiedene optische Faser (1) mittels eines Druckelements (6) zum Boden des Kanals (2.0) hin gedrückt wird, während die optische Faser (1) in den Kanal (2.0) angeordnet wird, wobei das Füllmetall (3) auf die optische Faser (1) abgeschieden wird, die bereits gegen den Boden des Kanals (2.0) gedrückt wurde.

10. Verfahren nach Anspruch 9, das automatisch ausgeführt wird, wobei während der Ausführung eine gleichzeitige und gemeinsame Verschiebung der Spule (5), der Schweißquelle (4) und des Druckelements (6) bewirkt wird.

11. Verfahren nach einem der Ansprüche 1 bis 10, wobei die optische Faser (1) vom Typ der Rayleigh-, Brillouin- oder Raman-Streuung ist.

12. Vorrichtung zum Integrieren einer optischen Faser in eine Metallstruktur, wobei die Vorrichtung (100) ein Klemmelement (9), das dazu konfiguriert ist, ein Ende einer mit einer Metallbeschichtung (1.0) beschichteten optischen Faser (1) festzuklemmen, eine Spule (5), auf die die beschichtete optische Faser (1) aufgewickelt ist, eine Lichtbogenschweißquelle (4), die dazu konfiguriert ist, bei ihrer Betätigung kontinuierlich zu schmelzen und ein geschmolzenes Füllmetall (3) in Form eines Drahtes abzuscheiden, und ein Druckelement (6) umfasst, wobei die Vorrichtung (100) dazu konfiguriert ist, das Verfahren nach einem der Ansprüche 1 bis 11 zu implementieren, wobei die Vorrichtung (100) eine steuerbare bewegliche Vorrichtung (8), eine mit der beweglichen Vorrichtung (8) verbundene Steuereinheit, die dazu konfiguriert ist, eine Verschiebung der beweglichen Vorrichtung (8) zu steuern, und eine an der beweglichen Vorrichtung (8) angebrachte Halterung (7) umfasst, wobei die Spule (5), die Schweißquelle (4) und das Druckelement (6) an der Halterung (7) angebracht sind, wobei sich die Schweißquelle (4) stromabwärts des Druckelements (6) befindet und sich das Druckelement (6) stromabwärts der Spule (5) befindet, wobei die Steuereinheit mit der Schweißquelle (4) in Verbindung steht und dazu konfiguriert ist, die Betätigung der Schweißquelle (4) zu steuern.

13. Vorrichtung nach Anspruch 12, umfassend eine Plattform (10), die dazu konfiguriert ist, die Metallstruktur (2) zu tragen, wobei das Klemmelement (9) an der Plattform (10) angebracht ist.

14. Vorrichtung nach Anspruch 13, umfassend eine Schneidevorrichtung (11), die dazu konfiguriert ist, die beschichtete optische Faser (1) zu schneiden, und die an der Plattform (10) angebracht ist.

## Revendications

1. Procédé d'intégration d'une fibre optique dans une structure métallique, dans lequel la fibre optique (1) est disposée dans un canal (2.0) d'un logement (2.3) de la structure métallique (2), ladite fibre optique étant revêtue d'un revêtement métallique (1.0), et un métal d'apport fondu (3) est déposé sur ledit canal (2.0) et sur ladite fibre optique revêtue (1) disposée dans ledit canal (2.0) par un procédé de dépôt par apport direct d'énergie dans lequel une source de soudage à l'arc (4) est utilisée pour faire fondre et déposer en continu le métal d'apport fondu (3) sous forme de fil, le revêtement métallique (1.0) de la fibre optique (1) comprenant au moins un métal avec lequel le métal d'apport (3) entre en contact lorsqu'il est déposé, ledit métal présentant une température de fusion supérieure à la température utilisée dans le procédé de dépôt, et la composition du métal d'apport (3) étant identique à la composition du métal formant la structure métallique (2).

2. Procédé selon la revendication 1, dans lequel la fibre optique revêtue (1) est agencée dans un canal (2.0) ayant une profondeur telle que ladite fibre optique revêtue (1) ne fait pas saillie hors dudit canal (2.0) au niveau de sa partie supérieure.

3. Procédé selon la revendication 2, dans lequel le logement (2.3) de la structure métallique (2) comprend un chanfrein (2.1) entre une surface extérieure (2.4) de ladite structure métallique (2) et le canal (2.0) dudit logement (2.3).

4. Procédé selon l'une quelconque des revendications 1 à 3, comprenant l'usinage du logement (2.3) dans la structure métallique (2).

5. Procédé selon l'une quelconque des revendications 1 à 3, comprenant la formation du logement (2.3) au cours de la fabrication de la structure métallique (2) par une technique de fabrication additive.

6. Procédé selon l'une quelconque des revendications 1 à 5, dans lequel, pour agencer la fibre optique revêtue (1) dans le canal (2.0) de la structure métallique (2), une extrémité de ladite fibre optique (1) est serrée et ledit agencement est réalisé tandis que ladite extrémité est maintenue serrée.

7. Procédé selon la revendication 6, dans lequel la fibre optique revêtue (1) est déroulée à partir d'une bobine (5) à mesure qu'elle est agencée dans le canal (2.0) et est coupée une fois que toute la longueur requise de ladite fibre optique (1) a été agencée dans le canal (2.0), de sorte que la partie de la fibre optique (1) agencée dans le canal (2.0) est physiquement séparée de la partie de la fibre optique (1) qui reste enroulée sur la bobine (5).

8. Procédé selon la revendication 7, dans lequel le métal d'apport (3) est déposé sur la fibre optique (1) agencée dans le canal (2.0) à mesure que la fibre optique (1) est agencée dans le canal (2.0).

9. Procédé selon la revendication 8, dans lequel la fibre optique (1) déposée dans le canal (2.0) est pressée vers le fond dudit canal (2.0), à mesure que ladite fibre optique (1) est agencée dans ledit canal (2.0), au moyen d'un élément de pression (6), le métal d'apport (3) étant déposé sur la fibre optique (1) qui a déjà été pressée contre le fond dudit canal (2.0).

10. Procédé selon la revendication 9, qui est exécuté automatiquement, en provoquant un déplacement simultané et conjoint de la bobine (5), de la source de soudage (4) et de l'élément de pression (6) au cours de ladite exécution.

11. Procédé selon l'une quelconque des revendications 1 à 10, dans lequel la fibre optique (1) est du type à diffusion de Rayleigh, de Brillouin ou Raman.

12. Dispositif d'intégration d'une fibre optique dans une structure métallique, le dispositif (100) comprenant un élément de serrage (9) configuré pour serrer une extrémité d'une fibre optique (1) revêtue d'un revêtement métallique (1.0), une bobine (5) sur laquelle ladite fibre optique revêtue (1) est enroulée, une source de soudage à l'arc (4) configurée pour, lors de son actionnement, faire fondre et déposer en continu un métal d'apport fondu (3) sous forme de fil, et un élément de pression (6), dans lequel le dispositif (100) est configuré pour mettre en œuvre le procédé selon l'une quelconque des revendications 1 à 11, le dispositif (100) comprenant un dispositif mobile commandable (8), une unité de commande en communication avec le dispositif mobile (8) et configurée pour commander un déplacement du dispositif mobile (8), et un support (7) fixé au dispositif mobile (8), la bobine (5), la source de soudage (4) et l'élément de pression (6) étant fixés audit support (7), la source de soudage (4) étant située en aval de l'élément de pression (6) et l'élément de pression (6) étant situé en aval de la bobine (5), l'unité de commande étant en communication avec la source de soudage (4) et configurée pour commander l'actionnement de la source de soudage (4).

13. Dispositif selon la revendication 12, comprenant une plateforme (10) configurée pour supporter la structure métallique (2), l'élément de serrage (9) étant fixé à ladite plateforme (10).

14. Dispositif selon la revendication 13, comprenant un dispositif de coupe (11) configuré pour couper la fibre optique revêtue (1) et fixé à la plateforme (10).
